# EUROPEAN PATENT SPECIFICATION

(11) **EP 3 129 186 B1**
(45) Date of publication and mention of the grant of the patent: **19.02.2020**
(21) Application number: 15718506.7
(22) Date of filing: 09.04.2015
(51) Int. Cl.: B24B 39/04, B23P 9/02

(54) **AN ON-SITE RESIDUAL STRESS CREATION TOOL FOR AND METHOD OF TREATING A CRANKSHAFT BEARING SURFACE AND/OR CRANKSHAFT BEARING FILLET**
WERKZEUG ZUR RESTSPANNUNGSERZEUGUNG VOR ORT UND VERFAHREN ZUR BEHANDLUNG EINER KURBELWELLENLAGEROBERFLÄCHE UND/ODER KURBELWELLENLAGERLEISTE
OUTIL DE CRÉATION DE CONTRAINTE RÉSIDUELLE SUR SITE POUR, ET PROCÉDÉ DE, TRAITEMENT D'UNE SURFACE DE PALIER DE VILEBREQUIN ET/OU D'UN CONGÉ DE PALIER DE VILEBREQUIN

(30) Priority: 10.04.2014 FI 20145345
(43) Date of publication of application: 15.02.2017
(73) Proprietor: Wärtsilä Finland Oy, 65100 Vaasa (FI)
(72) Inventor: FRONDELIUS, Tero, FI-65100 Vaasa (FI); GUSTAFSSON, Krister, S-417 55 Göteborg (SE); GUSTAFSSON, Reine, S-417 55 Göteborg (SE); HALLA-AHO, Pasi, FI-65100 Vaasa (FI)
(74) Representative: Genip Oy
(86) International application number: PCT/FI2015/050244
(87) International publication number: WO 2015/155414

(56) References cited:
- WO-A1-2010/054648
- US-A- 2 818 685
- US-A1- 2005 107 230

## Description

### Technical field

The invention relates to an on-site residual stress creation tool for treating a crankshaft bearing surface inside an internal combustion piston engine comprising a body structure and a residual stress treatment device for treating the bearing surface and/or crankshaft bearing fillet according to the preamble of claim 1. An example of such a tool is disclosed by US 2 818 685 A.

The invention also relates to a method of treating a crankshaft in-side an internal combustion piston engine by subjecting the crankshaft to treatment by means of a residual stress creation tool according to claim 11.

### Background art

In an internal combustion piston engine the crankshaft is operating in harsh circumstances which set high standards to the structure and the material of the crankshaft in respect to its strength.

Fatigue strength of crankshaft material is the most important engine size limiting and power density limiting factor particularly in large piston engine design. A large piston engine may be considered to be an engine capable of operating as a prime mover in a ship or operate an in a power plant. As another way of defining a large engine may be considered the power which may be obtained by one cylinder of the engine, in which case engines capable of producing more than 150 kW per cylinder are considered as large engines.

Materials used in crankshafts have been developed over last 20 years and fatigue strength has been managed to increase remarkably. A feasible means for increasing the fatigue strength is so called deep rolling method. US2005107230 A1 discloses a deep rolling tool suitable for performing deep rolling treatment and the method itself. Rolling the work piece causes the edge layer to be deformed. The rolling force used in this process is selected such that the surface layer will have plastic deformation during rolling. This is essentially associated with three advantages, Firstly, residual internal stresses are created in the edge layer of the component, which are also suitable for counteracting tensile stresses that occur otherwise in the edge layer. Secondly, greater resistances are achieved locally with cold forming. The surface is smoothed microscopically, so that the micronotches, which may lead to cracks, are largely eliminated.

WO2010054648 A1 describes a method for increasing the flexural strength of crankshafts by hardening the transitional radius between a bearing pin and an adjacent web, deep rolling the hardened transitional radius and applying an external load to the crankshaft during the deep rolling.

For example a bearing seizure will heat up the crankshaft bearing surface. A residual stress created at manufacturing stage may disappear and a renovation is required. Particularly in large engines where the crankshaft may have a weight of magnitude of thousands of kilograms it is obvious that removal of such shaft from an engine and taking it to a workshop is extremely difficult task. It would therefore be desirable and advantageous to provide an improved tool by means of which the treatment of the crankshaft bearing may be performed on site without removing the crankshaft from the engine.

It is therefore an object of the invention to provide a tool which makes it possible to subject a bearing of crankshaft of a piston engine to a surface treatment inside the engine.

### Disclosure of the Invention

Object of the invention is substantially met by an on-site residual stress creation tool for treating a crankshaft bearing surface inside an internal combustion piston engine comprising a body structure and a residual stress treatment device for treating the bearing surface and/or crankshaft bearing fillet. It is characteristic to the invention that the body structure comprises a support part attachable around a journal of the crankshaft and an attachment part coupled to the support part, and that the body structure comprises a bearing structure by means of which the attachment part may be supported by the support part when attached to the journal of the crankshaft and arranged coaxially rotatable around the journal of the crankshaft, and that the residual stress treatment device is arranged to the attachment part of the body structure, and that the residual stress creation tool further comprises a drive system to rotate the attachment part and the residual stress treatment device in respect to the support part.

The tool according to the invention provides a straightforward and therefore also accurate and fast positioning of the residual stress treatment device in respect to the journal. It should be noted that even if the treating of the whole length of the journal requires two separate successive attachment procedures to the journal the attachment and removal of the tool is so easy that still considerably benefits are obtained by using the tool according to the invention.

According to an embodiment of the invention the support part comprises an adjustment part arranged radially inside the support part having its inner diameter corresponding to the journal diameter onto which it is intended to be installed.

According to an embodiment of the invention the support part comprises two or more segments forming together a substantially circular part having its inner diameter corresponding to the journal diameter onto which it is intended to be installed.

According to an embodiment of the invention the support part is made of material which may not cause damage to the surface of the journal surface when attached on the journal, such as steel or aluminium or aluminium alloy.

According to an embodiment of the invention the support part comprises two or more segments forming together a substantially circular part having its inner diameter greater than the journal diameter to which it is intended to be installed and an adjustment part comprising two or more segments forming together a substantially circular part having its inner diameter corresponding to the journal diameter onto which it is intended to be installed and it outer diameter corresponding to the inner diameter of the support part.

According to an embodiment of the invention the attachment part comprises two or more segments forming together a substantially circular part and that the tool further comprises the bearing structure is arranged radially between the support part and the attachment part.

According to an embodiment of the invention the drive system comprises a power device. There is also a force transmission system, which force transmission system facilitates positioning of the power device at a distance from the attachment part.

According to an embodiment of the invention the attachment part comprises a gear section at its outer surface and the force transmission system comprises an endless drive loop between the gear section and the power device of the drive system.

According to an embodiment of the invention the residual stress treatment device is a deep rolling device or a cold rolling device or other mechanical treatment device or stroke peening device. It has also been discovered that a so called stroke peening process wherein the surface is peened, as well as cold rolling results in similar advantageous effects as the deep rolling process.

Object of the invention is met also by method of treating a crankshaft journal in-side an internal combustion piston engine by subjecting the crankshaft journal bearing surface and/or crankshaft bearing fillet to a treatment by means of a residual stress creation tool comprising a body structure and a residual stress treatment device, the method comprising:
- coupling a support part of the body structure around a journal of the crank shaft of the engine,
- coupling an attachment part of the body structure rotatably to the support part,
- arranging the residual stress treatment device to the attachment part such that it may subject a treatment to the crankshaft journal bearing surface and/or crankshaft bearing fillet,
- coupling a drive system to the attachment part to rotate the attachment part and the residual stress treatment device in respect to the support part and the journal of the crankshaft, and
- simultaneously operating the residual stress treatment device and rotating the attachment part and the residual stress treatment device around the journal of the crankshaft so that the residual stress treatment device subjects the treatment to the bearing surface and/or crankshaft bearing fillet.

According to an embodiment of the invention the method comprises a further step of changing the axial position of the residual stress treatment device in respect to the journal of the crankshaft during the operation.

According to an embodiment of the invention, the method comprises a further step of changing the angle of the residual stress treatment device in respect to the centre axis (A) of the journal during the operation.

According to an embodiment of the invention the method comprises arranging a power device of the drive system outside the engine and transmitting force from the drive system to the attachment part inside the engine through a force transmission system and rotating the attachment part and the residual stress treatment device around the journal of the crankshaft.

According to an embodiment of the invention comprises coupling a support part of the body structure around a journal, between the webs of the crank shaft in the engine.

According to an embodiment of the invention, the method comprises the treatment which is a deep rolling treatment cold rolling treatment, other mechanical treatment or stroke peening treatment.

According to an embodiment of the invention, the attachment part and the residual stress treatment device is rotated around the crankshaft in both rotational directions i.e. first in a first, direction and after that in a second direction. For example, the attachment part and the residual stress treatment device can rotate 1-5 rounds around the crankshaft on the first direction and 1-5 rounds around the crankshaft on the second direction. Thus the rotation direction is changeable.

According to an embodiment of the invention the treatment is a deep rolling treatment or cold rolling treatment or other mechanical treatment or stroke peening treatment.

By means of the present invention it is possible to repair the crankshaft on site and increase the fatigue strength without moving the shaft from the engine. For example the deep rolling method creates the residual stress on material up to 3-5 mm thickness and increase the fatigue strength up to 30%. Thus it is possible to provide on-site treatment of deep rolling or stroke peening for crankshafts e.g. after a bearing seizure in the field. It is also possible to increase the crankshaft safety and make power increase to existing engines without re-design the crankshafts. It is further possible to make the engines more reliable, smaller and more power density efficient.

The deep rolling process usually extends over several revolutions of the work piece. The rolling force is gradually increased over a given number of revolutions, then kept constant, and finally reduced again over a further predetermined number of revolutions. The soft engagement/disengagement of the roller avoids sharp stress increases and the additional notching effects that necessarily accompany such.

When deep rolling, the tools are loaded with very high rolling forces. During the rolling process, the roller is pressed against the work piece to be compacted with a defined force and is moved relative thereto.

### Brief Description of Drawings

In the following, the invention will be described with reference to the accompanying exemplary, schematic drawings, in which
Figure 1 illustrates an on-site tool according to an embodiment of the invention, and
Figure 2 illustrates the on-site tool of figure 1 as a cross section al view with a drive system according to an embodiment of the invention.

### Detailed Description of Drawings

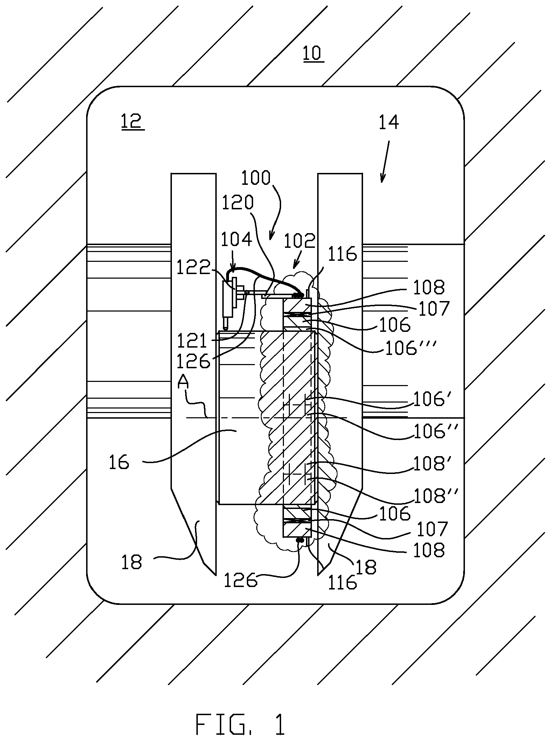

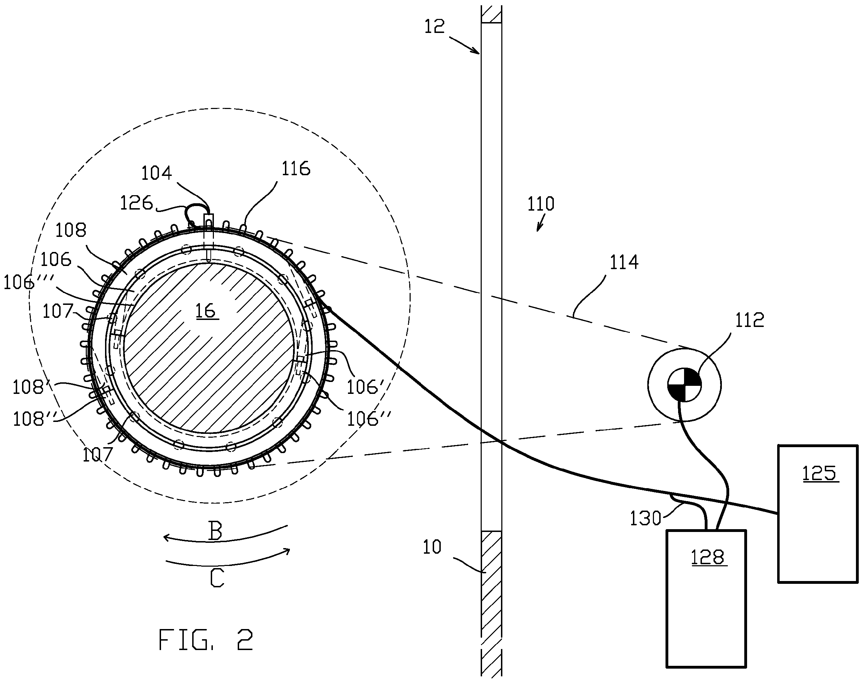

Figure 1 schematically shown a piston engine 10 Into which an opening 12 has been arranged for service or other purposes. The engine is provided with a crankshaft 14 which comprises journals 16 and crank webs 18, as is well known in the art. As is seen in the figure 1 at least the journal which is to be treated by the device and method according to the invention must be open i.e. the bearing housing must be removed as preparation work to practise the method. As Is known the journal is of circular cross section and its outer surface has been treated suitably to operate as a bearing surface. Figure 2 shows a cross sectional view of the journal 16 of figure 1 on which the on-site tool according to the invention has been installed.

The on-site residual stress creation tool 100 is placed onto the crankshaft journal 16 in the figure 1 and 2. The residual stress creation tool 100 comprises a body structure 102 and a residual stress treatment device 104 arranged to the body structure 102. By means of the body structure 102 the residual stress treatment device 104 is arranged at its working distance from the journal surface so that the device 104 may perform its treatment task to the journal over its perimeter and at several selectable axial locations. The axial location refers to a location in direction of the central axis A of the journal 16 which is also the central axis of the assembled residual stress creation tool.

In the embodiment of figure 1 the body structure 102 comprises a support part 106. The support part 106 is arranged attachable around the crankshaft journal 16 so that it may be positioned coaxially with the journal 16, after attached on the journal. The support part 106 is advantageously formed of several segment parts 106',106" which together circumscribe the journal. According to the embodiment shown in figure 1 the support part 106 is formed two segment parts 106', 106" which together, when coupled with each other form a substantially continuous circular part arranged to circumscribe the journal 16. As can be seen from the figure 1 the on-site residual stress creation tool 100 is configured such that may be fitted between the webs 18 of the crank shaft. This way the treatment of the journal inside the engine is made more convenient. Also, the tool according to the invention provides accurate and easy positioning of the residual stress treatment device 104 around the journal. Thus the treatment process results in very good quality.

The support part 106 may be comprised of - in addition to its actual support structure - an additional adjustment part 106"'. The adjustment part 106'" is arranged compatible with the support part, i.e. its support structure by means of which the support part may be fitted to journals having different diameter. The support part 106, or at least its inner surface and/or the adjustment part 106'" is of material which may not cause damage to the surface of the journal surface when attached on the journal 16, such as steel or aluminium or aluminium alloy or combination thereof. The adjustment part 106'" is arranged radially inside the support part 106.

According to an embodiment of the invention the adjustment part 106'" extends circularly over the inner surface of the support part forming a support circumscribing the journal.

According to another embodiment of the invention the adjustment part is formed of separate sections arranged to be assembled in evenly spaced manner along the inner surface of the support part 106 and along the outer surface of the journal, when installed for use in the engine.

When the segment part is formed of two parts, the segment parts 106', 106" are curved pieces which both generally form a 180 degrees circular arc. They are coupled which together by setting the ends against each other and fastening e.g. by threaded bolts with each other.

The body structure comprises also an attachment part 108 for supporting the residual stress creation tool 104 and providing the rotational movement of the tool required by the treatment. The attachment part 108 is arranged attachable around the support part 106 so that it may be positioned coaxially with the journal 16. The attachment part 108 is also formed of several segment parts. According to the embodiment shown in figure 2 the attachment part 108 is formed two segment parts 108', 108" which together, when coupled with each other form a substantially continuous circular part arranged to circumscribe the journal 16. The attachment part is arranged be installed coaxially with the journal 16 and therefore the central axis A of the journal 16 is also the central axis of the rotational movement of the attachment part.

The attachment part 108 is rotatably coupled with the support part 106 by means of the bearing structure 107 in the body structure 102. The bearing structure 107 may be arranged in connection with either of the support part 106 or the attachment part 108 so that the parts are rotatably supported with each other by the bearing structure 107.

By means of the bearing structure 107 it is possible to support the attachment part 108 by the support part 106 when it is attached to the crankshaft 14 coaxially rotatable around a journal 16 of the crankshaft. The bearing structure 107 is arranged between the attachment part 108 and the support part 106.

The residual stress treatment device 104 is arranged to the attachment part 108 of the body structure 102. The residual stress treatment device 104 is provided with at least a first actuator 120 which makes it possible to move the residual stress treatment device 104 axially i.e. in the direction of the centre axis A of the journal. The residual stress treatment device 104 is provided with a second actuator 122 which makes it possible to move the residual stress treatment device 104 radially i.e. in the direction perpendicular to the axis A. The second actuator may also be used to press the residual stress treatment device 104 against the surface of the journal with a controllable force. In addition, the residual stress treatment device 104 is advantageously provided with a third actuator 121 such as a joint or a ball joint which makes it possible to change an angle of the residual stress treatment device 104. In respect to the centre axis A of the journal. The residual stress treatment device 104 may be for example a deep rolling device shown in US2005107230 A1 or cold rolling treatment device, other mechanical treatment device for increasing fatigue strength or stroke peening treatment device. The disclosure of US2005107230 A1 relating to deep rolling process and the rolling tool is herein incorporated as a reference.

The residual stress creation tool comprises further a drive system 110 to rotate the attachment part 108 and the residual stress treatment device 104 in respect to the support part 106 and when installed on the journal 16 of the crankshaft 14 in the engine, also in respect to the journal 16 of the crankshaft 14.

The drive system 110 comprises a power device 112 and a force transmission system 114. The force transmission system is arranged such that the power device 112 may be positional at a distance from the attachment part 108 which providing the force transmission connection between them. When the drive is outside the engine there is an opening at the location of the crankshaft journal to be treated, in the longitudinal direction of the engine. As can be seen in the figure 2, when the tool is assembled in connection with the engine the power device 112 is positioned outside the engine and the force transmission system 114 is led through the opening 12. This saves the space inside the engine 10.

The attachment part 108 comprises a gear section 116 and the force transmission system 114. The force transmission system 114 comprises an endless drive band, such as a chain or a belt, between the gear section 116 and the power device 112 of the drive system. The gear section 116 is meshing with the drive band. Here the gear section is at the outer surface of the attachment part 108.

The attachment part 108 is shown here arranged radially outside the support part 106, but it may be arranged wholly or partially axially on the side of the support part 106, but such that it does not come in contact with the journal surface of the crankshaft 14.

As is depicted in figure 2 the residual stress treatment device 104 may need external power to operate and perform the intended treatment. The residual stress treatment device 104 is connected to a source of pressurized working fluid 125, such as a hydraulic power system. There is a hose 126 or a like via which the hydraulic fluid may be led to the residual stress treatment device 104. The hose 126 may be coiled over the attachment part 108 to ease the handling of the hose while the residual stress treatment device 104 rotates around the journal 16. There may be a data transfer cabling 130 connected to the hose 126 via which operational control of the residual stress treatment device may arranged in communication with a control system 128. The control system is provided with instructions to operate the residual stress treatment device 104 and/or the drive system to result in a desired treatment.

Figure 2 depicts schematically the rotating directions that the attachment part 108 and the residual stress treatment device 104 can be rotated around the crankshaft in both rotational directions i.e. on a clockwise direction B and a counter clockwise direction C with respect to a first end view of the crankshaft. For example, the attachment part 108 and the residual stress treatment device 104 can rotate 1-5 rounds around the crankshaft in the clockwise direction B and then change the rotation direction and rotate 1-5 rounds around the crankshaft in the counter clockwise direction C with respect to the first end view of the crankshaft. The number of rotation rounds is dependent on the length of the hose or a like 126 because the hose 126 will be coiled around the attachment part 108 while the residual stress treatment device 104 rotates around the journal 16.

It should be noted that even though the drive system 110 is located outside the piston engine 10 it is possible to design and arrange the drive system 110 inside the piston engine 10 and even integrate into the body structure 102.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

## Claims

1. An on-site residual stress creation tool (100) for treating a crankshaft bearing surface inside an internal combustion piston engine comprising a body structure (102) and a residual stress treatment device (104) for treating the bearing surface and/or crankshaft bearing fillet, **characterized in that** the body structure comprises a support part (106) attachable around a journal (16) of the crankshaft and an attachment part (108) coupled to the support part, and that the body structure (102) comprises a bearing structure (107) by means of which the attachment (108) part may be supported by the support part (106) when attached to the journal (16) of the crankshaft (14) and arranged coaxially rotatable around the journal (16) of the crankshaft, and that the residual stress treatment device (104) is arranged to the attachment part (108) of the body structure, and that the residual stress creation tool (100) further comprises a drive system to rotate the attachment part and the residual stress treatment device (104) in respect to the support part.

2. An on-site residual stress creation tool according to claim 1, **characterized in that** the support part (106) comprises two or more segments forming together a substantially circular part having its inner diameter corresponding to the journal diameter onto which it is intended to be installed.

3. An on-site residual stress creation tool (100) according to claim 1, **characterized in that** the support part (106) comprises an adjustment part arranged radially inside the support part (106) having its inner diameter corresponding to the journal diameter onto which it is intended to be installed.

4. An on-site residual stress creation tool according to claim 2, **characterized in that** the support part (106) is made of material which may not cause damage to the surface of the journal surface when attached on the journal, such as steel or aluminium or aluminium alloy.

5. An on-site residual stress creation tool according to claim 1, **characterized in that** the support part (106) comprises two or more segments forming together a substantially circular part having its inner diameter greater than the journal diameter to which it is intended to be installed and an adjustment part comprising two or more segments forming together a substantially circular part having its inner diameter corresponding to the journal diameter onto which it is intended to be installed and it outer diameter corresponding to the inner diameter of the support part (106).

6. An on-site residual stress creation tool according to claim 2 or 3, **characterized in that** the attachment part (108) comprises two or more segments forming together a substantially circular part and that the tool further comprises the bearing structure (107) is arranged radially between the support part (106) and the attachment part (108).

7. An on-site residual stress creation tool according to claim 1, **characterized in that** drive system (110) comprises a power device (112) arranged to rotate the attachment part (108) and the residual stress treatment device (104).

8. An on-site residual stress creation tool according to claim 1, **characterized in that** drive system (110) comprises a power device (112) and a force transmission system (114), which force transmission system (114) facilitates positioning of the power device (112) at a distance from the attachment part (108).

9. An on-site residual stress creation tool according to claim 8, **characterized in that** the attachment part (108) comprises a gear section (116) at its outer surface and the force transmission system comprises an endless drive loop between the gear section and the power device of the drive system.

10. An on-site residual stress creation tool according to anyone of the preceding claims, **characterized in that** the residual stress treatment device (104) is a deep rolling device, cold rolling treatment device and/or stroke peening treatment device.

11. Method of treating a crankshaft journal inside an internal combustion piston engine by subjecting the crankshaft journal bearing surface and/or crankshaft bearing fillet to a treatment by means of a residual stress creation tool comprising a body structure (102) and a residual stress treatment device (104), the method **comprising:**
- coupling a support part (106) of the body structure (102) around a journal of the crank shaft of the engine,
- coupling an attachment part (108) of the body structure (102) rotatably to the support part (106),
- arranging the residual stress treatment device (104) to the attachment part (108) such that it may subject a treatment to the crankshaft journal bearing surface and/or crankshaft bearing fillet,
- coupling a drive system (110) to the attachment part to rotate the attachment part (108) and the residual stress treatment device (104) in respect to the support part (106) and the journal of the crankshaft, and
- simultaneously operating the residual stress treatment device (104) and rotating the attachment part (108) and the residual stress treatment device (104) around the journal of the crankshaft so that the residual stress treatment device (104) subjects the treatment to the bearing surface and/or crankshaft bearing fillet.

12. Method according to claim 11, **comprising** a further step of changing the axial position of residual stress treatment device in respect to the journal of the crankshaft during the operation.

13. Method according to claim 11, **comprising** a further step of changing the angle of the residual stress treatment device in respect to the centre axis (A) of the journal during the operation.

14. Method according to claim 11, **comprising** arranging a power device of the drive system (110) outside the engine and transmitting force from the drive system (110) to the attachment part (108) inside the engine through a force transmission system and rotating the attachment part (108) and the residual stress treatment device around the journal of the crankshaft.

15. Method according to claim 11, **wherein** the treatment is a deep rolling treatment, cold rolling treatment, or stroke peening treatment.

16. Method according to claim 11, **comprising** a step wherein the attachment part (108) and the residual stress treatment device (104) is first rotated around the crankshaft in a first direction (B) and after that in a second direction (C).

17. Method according to claim 11, **comprising** a step wherein the support part (106) of the body structure (102) is coupled around a journal and between the webs (18) of the crank shaft in the engine.

## Patentansprüche

1. Vor-Ort-Restspannungserzeugungswerkzeug (100) zum Behandeln einer Kurbelwellenlageroberfläche innerhalb eines Verbrennungskolbenmotors, umfassend eine Körperstruktur (102) und ein Restspannungsbehandlungsgerät (104) zum Behandeln der Lageroberfläche und/oder der Kurbelwellenlagerausrundung, **dadurch gekennzeichnet, dass** die Körperstruktur ein Stützteil (106), das um einen Zapfen (16) der Kurbelwelle anbringbar ist, und ein Anbringungsteil (108) umfasst, das an das Stützteil gekuppelt ist, und dass die Körperstruktur (102) eine Lagerstruktur (107) umfasst, mittels welcher das Anbringungsteil (108) durch das Stützteil (106), wenn es am Zapfen (16) der Kurbelwelle (14) angebracht ist, gestützt und koaxial drehbar um den Zapfen (16) der Kurbelwelle angeordnet sein kann, und dass das Restspannungsbehandlungsgerät (104) am Anbringungsteil (108) der Körperstruktur angeordnet ist, und dass das Restspannungserzeugungswerkzeug (100) ferner ein Antriebssystem zum Drehen des Anbringungsteils und des Restspannungsbehandlungsgeräts (104) bezüglich des Stützteils umfasst.

2. Vor-Ort-Restspannungserzeugungswerkzeug nach Anspruch 1, **dadurch gekennzeichnet, dass** das Stützteil (106) zwei oder mehr Segmente umfasst, die zusammen ein im Wesentlichen kreisförmiges Teil ausbilden, dessen Innendurchmesser dem Zapfendurchmesser entspricht, auf dem es eingerichtet werden soll.

3. Vor-Ort-Restspannungserzeugungswerkzeug (100) nach Anspruch 1, **dadurch gekennzeichnet, dass** das Stützteil (106) ein Anpassungsteil, das radial innerhalb des Stützteils (106) angeordnet ist, umfasst, dessen Innendurchmesser dem Zapfendurchmesser entspricht, auf dem es eingerichtet werden soll.

4. Vor-Ort-Restspannungserzeugungswerkzeug nach Anspruch 2, **dadurch gekennzeichnet, dass** das Stützteil (106) aus einem Material hergestellt ist, das keinen Schaden an der Oberfläche der Zapfenoberfläche verursachen kann, wenn es am Zapfen angebracht ist, wie etwa Stahl oder Aluminium oder Aluminiumlegierung.

5. Vor-Ort-Restspannungserzeugungswerkzeug nach Anspruch 1, **dadurch gekennzeichnet, dass** das Stützteil (106) zwei oder mehr Segmente, die zusammen ein im Wesentlichen kreisförmiges Teil ausbilden, dessen Innendurchmesser größer als der Zapfendurchmesser ist, auf dem es eingerichtet werden soll, und ein Anpassungsteil umfasst, das zwei oder mehr Segmente umfasst, die zusammen ein im Wesentlichen kreisförmiges Teil ausbilden, dessen Innendurchmesser dem Zapfendurchmesser entspricht, auf dem es eingerichtet werden soll, und dessen Außendurchmesser dem Innendurchmesser des Stützteils (106) entspricht.

6. Vor-Ort-Restspannungserzeugungswerkzeug nach Anspruch 2 oder 3, **dadurch gekennzeichnet, dass** das Anbringungsteil (108) zwei oder mehr Segmente umfasst, die zusammen ein im Wesentlichen kreisförmiges Teil ausbilden, und dass das Werkzeug ferner die Lagerstruktur (107) umfasst, die radial zwischen dem Stützteil (106) und dem Anbringungsteil (108) angeordnet ist.

7. Vor-Ort-Restspannungserzeugungswerkzeug nach Anspruch 1, **dadurch gekennzeichnet, dass** das Antriebssystem (110) ein Leistungsgerät (112) umfasst, das zum Drehen des Anbringungsteils (108) und des Restspannungsbehandlungsgeräts (104) angeordnet ist.

8. Vor-Ort-Restspannungserzeugungswerkzeug nach Anspruch 1, **dadurch gekennzeichnet, dass** das Antriebssystem (110) ein Leistungsgerät (112) und ein Kraftübertragungssystem (114) umfasst, wobei das Kraftübertragungssystem (114) das Positionieren des Leistungsgeräts (112) in einem Abstand zum Anbringungsteil (108) ermöglicht.

9. Vor-Ort-Restspannungserzeugungswerkzeug nach Anspruch 8, **dadurch gekennzeichnet, dass** das Anbringungsteil (108) eine Getriebesektion (116) an seiner Außenfläche umfasst und das Kraftübertragungssystem eine Endlosantriebsschleife zwischen der Getriebesektion und dem Leistungsgerät des Antriebssystems umfasst.

10. Vor-Ort-Restspannungserzeugungswerkzeug nach einem der vorhergehenden Ansprüche, **dadurch gekennzeichnet, dass** das Restspannungsbehandlungsgerät (104) ein Festwalzgerät, Kaltwalzbehandlungsgerät und/oder Stoßverformungsbehandlungsgerät ist.

11. Verfahren zum Behandeln eines Kurbelwellenzapfens innerhalb eines Verbrennungskolbenmotors durch Unterziehen der Kurbelwellenzapfenlageroberfläche und/oder Kurbelwellenlagerausrundung einer Behandlung mittels eines Restspannungserzeugungswerkzeugs, das eine Körperstruktur (102) und ein Restspannungsbehandlungsgerät (104) umfasst, das Verfahren umfassend:
- Kuppeln eines Stützteils (106) der Körperstruktur (102) um einen Zapfen der Kurbelwelle des Motors,
- Kuppeln eines Anbringungsteils (108) der Körperstruktur (102) drehbar an das Stützteil (106),
- Anordnen des Restspannungsbehandlungsgeräts (104) am Anbringungsteil (108), sodass es der Kurbelwellenzapfenlageroberfläche und/oder der Kurbelwellenlagerausrundung einer Behandlung unterziehen kann,
- Kuppeln eines Antriebssystems (110) an das Anbringungsteil zum Drehen des Anbringungsteils (108) und des Restspannungsbehandlungsgeräts (104) bezüglich des Stützteils (106) und des Zapfens der Kurbelwelle, und
- simultanes Betreiben des Restspannungsbehandlungsgeräts (104) und Drehen des Anbringungsteils (108) und des Restspannungsbehandlungsteils (104) um den Zapfen der Kurbelwelle, sodass das Restspannungsbehandlungsgerät (104) der Lageroberfläche und/oder der Kurbelwellenlagerausrundung der Behandlung unterzieht.

12. Verfahren nach Anspruch 11, umfassend einen weiteren Schritt des Änderns der axialen Position des Restspannungsbehandlungsgeräts bezüglich des Zapfens der Kurbelwelle während des Betriebs.

13. Verfahren nach Anspruch 11, umfassend einen weiteren Schritt des Änderns des Winkels des Restspannungsbehandlungsgeräts bezüglich der Mittelachse (A) des Zapfens während des Betriebs.

14. Verfahren nach Anspruch 11, umfassend das Anordnen eines Leistungsgeräts des Antriebssystems (110) außerhalb des Motors und Übertragen von Kraft vom Antriebssystem (110) auf das Anbringungsteil (108) innerhalb des Motors über ein Kraftübertragungssystem und Drehen des Anbringungsteils (108) und des Restspannungsbehandlungsgeräts um den Zapfen der Kurbelwelle.

15. Verfahren nach Anspruch 11, wobei die Behandlung eine Festwalzbehandlung, Kaltwalzbehandlung und/oder Stoßverformungsbehandlung ist.

16. Verfahren nach Anspruch 11, umfassend einen Schritt, bei dem das Anbringungsteil (108) und das Restspannungsbehandlungsgerät (104) zunächst in einer ersten Richtung (B) um die Kurbelwelle gedreht wird und dann in einer zweiten Richtung (C).

17. Verfahren nach Anspruch 11, umfassend einen Schritt, bei dem das Stützteil (106) der Körperstruktur (102) um einen Zapfen und zwischen die Stege (18) der Kurbelwelle im Motor gekuppelt wird.

## Revendications

1. Outil de création de tensions résiduelles sur site (100) permettant de traiter une surface de palier de vilebrequin à l'intérieur d'un moteur à piston à combustion interne comprenant une structure de corps (102) et un dispositif de traitement de tensions résiduelles (104) permettant de traiter la surface de palier et/ou une soudure de palier de vilebrequin, **caractérisé en ce que** la structure de corps comprend une partie de support (106) apte à être fixée autour d'un tourillon (16) du vilebrequin et une partie de fixation (108) accouplée à la partie de support, et **en ce que** la structure de corps (102) comprend une structure de palier (107) au moyen de laquelle la partie de fixation (108) peut être supportée par la partie de support (106) lorsque celle-ci est fixée au tourillon (16) du vilebrequin (14) et arrangée de façon coaxialement rotative autour du tourillon (16) du vilebrequin, et **en ce que** le dispositif de traitement de tensions résiduelles (104) est disposé sur la partie de fixation (108) de la structure de corps, et **en ce que** l'outil de création de tensions résiduelles (100) comprend en outre un système d'entraînement destiné à faire tourner la partie de fixation et le dispositif de traitement de tensions résiduelles (104) par rapport à la partie de support.

2. Outil de création de tensions résiduelles sur site selon la revendication 1, **caractérisé en ce que** la partie de support (106) comprend deux ou plusieurs segments formant conjointement une partie substantiellement circulaire dont le diamètre intérieur correspond au diamètre du tourillon sur lequel elle est censée être installée.

3. Outil de création de tensions résiduelles sur site (100) selon la revendication 1, **caractérisé en ce que** la partie de support (106) comprend une partie de réglage disposée radialement à l'intérieur de la partie de support (106), dont le diamètre intérieur correspond au diamètre du tourillon sur lequel elle est censée être installée.

4. Outil de création de tensions résiduelles sur site selon la revendication 2, **caractérisé en ce que** la partie de support (106) est constituée d'un matériau n'endommageant pas la surface de la surface de tourillon lorsque celle-ci est fixée au tourillon, tel que l'acier ou l'aluminium ou un alliage d'aluminium.

5. Outil de création de tensions résiduelles sur site selon la revendication 1, **caractérisé en ce que** la partie de support (106) comprend deux ou plusieurs segments formant conjointement une partie substantiellement circulaire dont le diamètre intérieur est supérieur au diamètre du tourillon sur lequel elle est censée être installée et une partie de réglage comprenant un ou plusieurs segments formant conjointement une partie substantiellement circulaire dont le diamètre intérieur correspond au diamètre du tourillon sur lequel elle est censée être installée et dont le diamètre extérieur correspond au diamètre intérieur de la partie de support (106) .

6. Outil de création de tensions résiduelles sur site selon la revendication 2 ou 3, **caractérisé en ce que** la partie de fixation (108) comprend deux ou plusieurs segments formant conjointement une partie substantiellement circulaire et **en ce que** l'outil comprend en outre la structure de palier (107) disposée radialement entre la partie de support (106) et la partie de fixation (108).

7. Outil de création de tensions résiduelles sur site selon la revendication 1, **caractérisé en ce que** le système d'entraînement (110) comprend un dispositif électrique (112) conçu pour faire tourner la partie de fixation (108) et le dispositif de traitement de tensions résiduelles (104).

8. Outil de création de tensions résiduelles sur site selon la revendication 1, **caractérisé en ce que** le système d'entraînement (110) comprend un dispositif électrique (112) et un système de transmission de force (114), ledit système de transmission de force (114) facilitant le positionnement du dispositif électrique (112) à une distance de la partie de fixation (108).

9. Outil de création de tensions résiduelles sur site selon la revendication 8, **caractérisé en ce que** la partie de fixation (108) comprend une section d'engrenage (116) au niveau de sa surface extérieure et le système de transmission de force comprend une boucle d'entraînement sans fin entre la section d'engrenage et le dispositif électrique du système d'entraînement.

10. Outil de création de tensions résiduelles sur site selon l'une quelconque des revendications précédentes, **caractérisé en ce que** le dispositif de traitement de tensions résiduelles (104) est un dispositif de galetage, un dispositif de traitement par laminage à froid et/ou un dispositif de traitement par martelage.

11. Procédé de traitement d'un tourillon de vilebrequin à l'intérieur d'un moteur à piston à combustion interne, consistant à soumettre la surface de palier du tourillon de vilebrequin et/ou la soudure de palier de vilebrequin à un traitement à l'aide d'un outil de création de tensions résiduelles comprenant une structure de corps (102) et un dispositif de traitement de tensions résiduelles (104), le procédé comprenant :
- l'accouplement d'une partie de support (106) de la structure de corps (102) autour d'un tourillon du vilebrequin du moteur,
- l'accouplement d'une partie de fixation (108) de la structure de corps (102) de façon rotative à la partie de support (106),
- l'installation du dispositif de traitement de tensions résiduelles (104) sur la partie de fixation (108) de manière à pouvoir traiter la surface de palier du tourillon de vilebrequin et/ou la soudure de palier de vilebrequin,
- l'accouplement d'un système d'entraînement (110) à la partie de fixation pour faire tourner la partie de fixation (108) et le dispositif de traitement de tensions résiduelles (104) par rapport à la partie de support (106) et au tourillon du vilebrequin, et
- l'actionnement du dispositif de traitement de tensions résiduelles (104) et la rotation simultanée de la partie de fixation (108) et du dispositif de traitement de tensions résiduelles (104) autour du tourillon du vilebrequin, de telle façon que le dispositif de traitement de tensions résiduelles (104) traite la surface de palier du tourillon de vilebrequin et/ou la soudure de palier de vilebrequin.

12. Procédé selon la revendication 11, comprenant une étape supplémentaire de modification de la position axiale du dispositif de traitement de tensions résiduelles par rapport au tourillon du vilebrequin pendant le fonctionnement.

13. Procédé selon la revendication 11, comprenant une étape supplémentaire de modification de l'angle du dispositif de traitement de tensions résiduelles par rapport à l'axe central (A) du tourillon pendant le fonctionnement.

14. Procédé selon la revendication 11, comprenant l'installation d'un dispositif électrique du système d'entraînement (110) à l'extérieur du moteur et la transmission d'une force depuis le système d'entraînement (110) à la partie de fixation (108) à l'intérieur du moteur par le biais d'un système de transmission de force, et la mise en rotation de la partie de fixation (108) et du dispositif de traitement de tensions résiduelles autour du tourillon du vilebrequin.

15. Procédé selon la revendication 11, dans lequel le traitement est un traitement de galetage, un traitement de laminage à froid, ou un traitement de martelage.

16. Procédé selon la revendication 11, comprenant une étape dans laquelle la partie de fixation (108) et le dispositif de traitement de tensions résiduelles (104) sont tout d'abord mis en rotation autour du vilebrequin dans une première direction (B), puis dans une deuxième direction (C).

17. Procédé selon la revendication 11, comprenant une étape dans laquelle la partie de support (106) de la structure de corps (102) est accouplée autour d'un tourillon et entre les bras (18) du vilebrequin dans le moteur.
